# EUROPEAN PATENT APPLICATION

(11) **EP 2 073 156 A1**
(43) Date of publication of application: **24.06.2009**
(21) Application number: 07123117.9
(22) Date of filing: 13.12.2007
(51) Int. Cl.: G06Q 10/00

(54) **Method and apparatus for generating a notification at a computing device**

(71) Applicant: Research In Motion Limited, Waterloo, Ontario N2L 3W8 (CA)
(72) Inventor: Adams, Neil, Waterloo Ontario N2K 4E4 (CA)
(74) Representative: Rickard, David John

(57) **Abstract**

A method and apparatus for generating a notification at a computing device is provided, the computing device having an output module. A meeting request having a requested time period is received. An attribute is determined based on the requested time period and on a calendar database comprising calendared events. The output module is caused to generate a notification if the attribute meets or exceeds a predetermined threshold.

## Description

The specification relates generally to calendar applications, and specifically to a method and apparatus for generating a notification at a computing device.

The use of electronic calendar applications in computing devices is widespread, with most computers and hand held electronic devices having at least one such application installed to assist a user of the computer or handheld electronic device in planning their schedule. Many calendar applications are integrated with an e-mail system, allowing the user to receive requests for meetings. If the meeting request is for a timeslot in which there is already a meeting scheduled, the electronic calendar application will generally generate a notification, indicating such, giving the user the opportunity to respond negatively to the meeting request, or rearrange the calendar to accommodate the meeting request.

However, in many instances the user may wish to use other criteria to base a decision on whether to accept the meeting request. Currently, however electronic calendar applications are limited in their capabilities to accommodate the user's expanded criteria. This leads to inefficiencies in the computing device due to an expanded interaction with the computing device as the user examines schedule data to determine whether to accept the meeting request.

### GENERAL

A first broad aspect of an embodiment seeks to provide a method of generating a notification at a computing device, the computing device having an output module. The method may comprise receiving a meeting request having a requested time period. The method may further comprise determining an attribute based on the requested time period and on a calendar database comprising calendared events. The method may further comprise causing the output module to generate a notification if the attribute meets or exceeds a predetermined threshold.

In some embodiments of the first broad aspect, determining an attribute may further comprises selecting a selected time period containing the requested time period, and calculating the attribute based on calendared events within the selected time period. In some of these embodiments, the selected time period may comprise at least one of free time on a given date, business hours on a given date, a weekday, a weekend, a given time period on a given date and a given time period within a given week. In other embodiments, determining an attribute may further comprise calculating the attribute based on at least one of a given network domain and a given network address.

In other embodiments of the first broad aspect, the predetermined threshold may comprise a maximum amount of meeting time within a selected time period.

In further embodiments of the first broad aspect, the predetermined threshold may comprise a maximum amount of meeting time during a predetermined portion of a selected time period.

In yet further embodiments, the predetermined threshold may comprise a maximum amount of meeting time outside a selected time period.

In some embodiments of the first broad aspect, the predetermined threshold may comprise at least one of a maximum amount of time, a given number of meetings, a percentage of a selected time period, and a percentage of a time period outside the selected time period.

In other embodiments of the first broad aspect, the meeting request may further comprise at least one of a network domain and a network address, the attribute is further based on at least one of a given network domain and a given network address, and causing the output module to generate a notification is further based on comparing at least one of the given network domain and the given network address with at least one of the network domain and the network address.

A second broad aspect of an embodiment seeks to provide a computing device for generating a notification. The computing device may comprise an interface configured for communication with a communications network, the interface for receiving meeting request via the communications network, the meeting request having a requested time period. The computing device may further comprise a memory for storing a calendar application. The calendar application may be configured for: determining an attribute based on the requested time period and on a calendar database comprising calendared events; and causing the output module to generate a notification if the attribute meets or exceeds a predetermined threshold. The computing device may further comprise a processing unit for processing the calendar application and transmitting a signal to trigger an output module to generate a notification, if the attribute meets or exceeds the predetermined threshold.

In some embodiments of the second broad aspect, the computing device may further comprise a handheld electronic device, an input device and the output module.

In other embodiments of the second broad aspect, the calendar application may further be configured for selecting a selected time period containing the requested time period; and calculating the attribute based on calendared events within the selected time period. In some of these embodiments, the selected time period may comprise at least one of free time on a given date, business hours on a given date, a weekday, a weekend, a given time period on a given date and a given time period within a given week. In other embodiments, determining an attribute may further comprise calculating the attribute based on at least one of a given network domain and a given network address.

In further embodiments of the second broad aspect, the predetermined threshold may comprise a maximum amount of meeting time within a selected time period.

In yet further embodiments of the second broad aspect, the predetermined threshold may comprise a maximum amount of meeting time during a predetermined portion of a selected time period.

In some embodiments of the second broad aspect, the predetermined threshold may comprise a maximum amount of meeting time outside a selected time period.

In other embodiments of the second broad aspect, the predetermined threshold may comprise at least one of a maximum amount of time, a given number of meetings, a percentage of a selected time period, and a percentage of a time period outside the selected time period.

In further embodiments of the second broad aspect, the meeting request may further comprise at least one of a network domain and a network address, the attribute is further based on at least one of a given network domain and a given network address, and causing the output module to generate a notification is further based on comparing at least one of the given network domain and the given network address with at least one of the network domain and the network address.

### BRIEF DESCRIPTIONS OF THE DRAWINGS

Embodiments are described with reference to the following figures, in which:

Fig. 1 depicts a system and apparatus generating a notification at a computing device , according to a non-limiting embodiment;

Fig. 2 depicts a method for generating a notification at a computing device , according to a non-limiting embodiment; and

Fig. 3 depicts non-limiting details of steps in the method of Figure 2.

### DESCRIPTION OF PREFERRED EMBODIMENTS

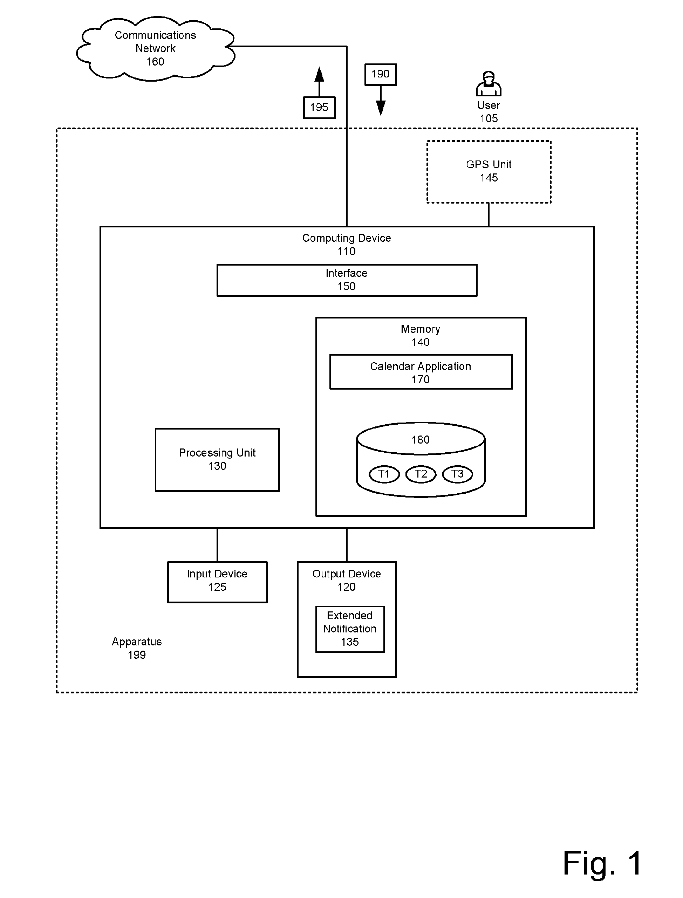

Figure 1 depicts a system for controlling an output device 120 to generate a schedule notification, according to a non-limiting embodiment. A computing device 110 associated with a user 105, is in communication with the output device 120 and an input device 125, the computing device 110 comprising a processing unit 130 for processing data, the processing unit 130 coupled to a memory 140 and an interface 150 for enabling the computing device 110 to communicate with a communications network 160. The memory 140 stores data for processing by the processing unit 130, including software such as a calendar application 170 and a calendar database 180 for storing data associated with the calendar application 170. The user 105 may cause the processing unit 130 to process the calendar application 170 by interfacing with the computing device 110 via the input device 125, and viewing a graphical user interface associated with the calendar application 170 on the output device 120. The user 105 may schedule meetings via the calendar application 170. A request 190 for a meeting may be received from a computing device associated with another user (not depicted), communicating via the communications network 160, via the interface 150; the request 190 may be processed by the processing unit 130 and the user 105 may be given the opportunity to respond to the request 190 via a dialog box displayed on the output device 120, for example to accept or reject the request 190 or to propose another time or location for the meeting, as known to one of skill in the art. The response 195 of the user 105 may then be transmitted to the computing device associated with the other user 105 via the communications network 160. Further functionality of the system depicted in Figure 1 will be described below.

The output device 120 comprises any output device for communicating data to the user 105. The output device 120 may comprise a visual display device (e.g. cathode ray tube (CRT), a flat panel display, and the like), an audio display device, a combination or another type of output device. The input device 125 comprises any device for receiving data from the user 105. The input device 125 may comprise a manual interface device, such as a keyboard and/or a pointing device, a voice interface device, or a combination thereof. Other types of input devices may occur to one of skill in the art. Embodiments are not to be considered particularly limited by the output device 120 or the input device 125, however.

In some embodiments, the computing device 110 comprises a personal computer. In other embodiments, the computing device 110, the output device 120 and the input device 125 may be elements of an apparatus 199. In some of these embodiments, the apparatus 199 may comprise a handheld electronic device operable to communicate with the communications network 160 via the interface 150. In these embodiments, the apparatus 199 may comprise a cell phone, a personal digital assistant (PDA), a WiFi-based communications device, a WiMax based communications device, or a combination thereof. In other embodiments, the apparatus 199 may comprise another type of handheld electronic device. In some embodiments, the handheld electronic device may be enabled to communicate via a wireless network, while in other embodiments, the handheld electronic device may be enabled to communicate via a wired network. In yet other embodiments, the handheld electronic device may be enabled to communicate via either a wireless or a wired network. In some embodiments the handheld electronic device is enabled to communicate with the communications network 160, via another computing device local to the handheld electronic device, which is in communication with the communications network 160. In these embodiments, the handheld electronic device may be enabled to communicate with the computing device local to the handheld device via a wired or a wireless link (e.g. WiFi, Bluetooth, and/or a hardwired serial bypass, such as a USB link).

In other embodiments, the apparatus 110 may comprise a computing device which is not a handheld electronic device. In these embodiments, the computing device 110 may comprise a laptop computer. In these embodiments the computing device may be operable to communicate via a wired network, a wireless network, or a combination thereof.

In some embodiments the communications network 160 may comprise at least one of a local area network (LAN), a wide area network (WAN), a wireless network, a packet-based communications network, such as the internet, and or the PSTN, a cell network, a WiFi network, a WiMax network, or a combination thereof.

The interface 150 enables the computing device 110 to communicate with via communication network 160, including receiving the request 190 for a meeting and transmitting the response 195. In embodiments where the communications network 160 comprises a wireless network, the interface 150 comprises a wireless communications interface, as known to one of skill in the art. Non-limiting examples of a wireless communications interface include, but are not limited to, a cell phone interface (e.g. CDMA, GSM, 1x, EVDO, UTMS, and the like), a WiFi interface, a WiMax interface, and the like. In embodiments where the communications network 160 comprises a wired communications network, the interface 150 comprises a wired communications interface, as known to one of skill in the art. In these embodiments, the interface 150 is enabled to connect to an edge device (not depicted) of the communications network 160, for example a modem. In some of these embodiments, the interface 150 may be enabled to connect to the edge device via another computing device, which is in communication with the communications network 160, as described above. In yet other embodiments the interface 150 may be enabled for communications via either a wired or a wireless communications network.

Embodiments are not to be considered particularly limiting by the computing device 110, whether integrated into the apparatus 199 or not, the interface 150 or the communications network 160, however, and other computing devices, interfaces and communications networks may occur to one of skill in the art.

In some embodiments, the system of Figure 1 may further comprise a GPS (global positioning system) unit 145 associated with the user 105, as known to one of skill in the art. The GPS unit 145 is enabled to determine the current location of the user 105 and provide the current position of the user 105 to the calendar application 170. Embodiments which comprise the GPS unit 145 will be described in more detail below.

The calendar application 170 may comprise any calendar application which allows the user 105 to organize their schedule. When the user 105 initiates the calendar application 170, the computing device 110 causes the calendar application 170 to be loaded into the processing unit 130 for processing. The calendar application 170 may comprise an executable file stored in the memory 140. The calendar application 170 may comprise further files stored in the memory 140. The calendar application 170 is enabled to retrieve data from the calendar database 180 presentation to the user 105 on the output device 120.In some embodiments, the calendar application may be further enabled to allow the user 105 receive and respond to e-mail. In other embodiments, the calendar application 170 may be enabled to interface with another software application (not depicted) stored in the memory 140 for allowing the user 105 to receive and respond to e-mail. In any event, the calendar application 170 is enabled to receive the request 190 for a meeting and assist the user 105 in determining the response 195 to the request 190. In some non-limiting embodiments the calendar application 170 may be further enabled to assist the user in organizing tasks, making notes, organizing contacts and the like. In some non-limiting embodiments the calendar application comprises Microsoft Outlook™ from Microsoft Corporation, One Microsoft Way, Redmond, WA 98052-7329, USA. In other non-limiting embodiments, the calendar application 170 comprises Lotus Notes™, Groupwise Calendar™, Google Calendar™, Hotmail Calendar™, and the like.

The calendar database 180 stores data associated with the calendar application 170, the data comprising a schedule of the user 105. In some embodiments, each meeting in the schedule of the user 105 is associated with a record of data associated with the meeting, each record stored at the calendar database 180. In a non-limiting example, the record of data associated with each meeting may comprise a Table T1:

| | |
|---|---|
| Date | May 25, 2007 |
| Start Time | 9 am |
| End Time | 12 pm |
| Location | Bob's Office, 1300 Yonge Street, Toronto |
| Subject | Discuss Software Project |

The non-limiting example of the Table T1 depicts a record of data associated with the meeting which occurs between 9am and 12pm, on May 25, 2007, the Table T1 comprising a date of the meeting, a start time for the meeting, and end time for the meeting, the location of the meeting and the subject of the meeting. In other embodiments, the Table T1 may comprise other data associated with the meeting.

The calendar application 170 is enabled to retrieve the data and process the data for display to the user 105 on the output device 120 such that the user 105 may view their schedule for a particular period of time, for example by the day, week, month and the like.

In some embodiments, the data may further comprise a Table T2 for storing the schedule. In a non-limiting example, the Table T2 comprises:

| | |
|---|---|
| Date: May | 25, 2007 |
| Time | Meetings |
| 6am | |
| 7am | Breakfast Meeting with Bob Smith |
| 8am | Discuss HR Policies |
| 9am | Discuss Software Project |
| 10am | |
| 11am | |
| 12am | |
| 1pm | |
| 2pm | |
| 3pm | |
| 4pm | |
| 5pm | |
| 6pm | |
| 7pm | |

In the non-limiting example, the Table T2 comprises a calendar date, a column indicating the time of day for the calendar date, and a column for indicating the presence of any meetings scheduled at a particular time of day on the calendar date. In other embodiments, the data is organized in a different manner as long as the meetings are associated with the time of day, and the date, on which they are scheduled. In some embodiments, a GUI for displaying a representation of T2 is generated when the user 105 initiates the calendar application, while in other embodiments, a GUI similar to the Table T2 is generated by processing each record of data associated with the meeting, for example the Table T1.

Furthermore, the computing device 110 is enabled to generating a notification at the computing device 110, for example at the output device 120, upon processing the calendar application 170. For example, a meeting request may be received, such as the request 190 for a meeting, the meeting request having a requested time period. A determination of an attribute is performed based on the requested time period and on the calendar database 180, which comprises calendared events, as described above. An output module (e.g. the output device 120) is then caused to generate a notification if said attribute meets or exceeds a predetermined threshold, as described below. In some instances, as will be further described below, determination of an attribute further comprises: selecting a selected time period containing said requested time period; and calculating the attribute based on calendared events within the selected time period.

In some embodiments, the data associated with the calendar application 170 stored at the calendar database 180, may further comprise a predetermined threshold associated with the user 105. In some embodiments, the predetermined threshold may be stored in the calendar database 180, in a Table T3, in Table T2, or in another table. Embodiments of the Table T3 are described below. In some embodiments, the predetermined threshold may be provisioned by the user 105 during a provisioning process, or updated by the user 105 at any time, by interacting with the calendar application 170 via the input device 125 and the output device 120. In these embodiments, the calendar application 170 is enabled to cause the predetermined threshold of the user 105 to be stored in the calendar database 180.

In some embodiments, the predetermined threshold comprises a preference to limit time in the schedule spent in meetings expressed as a maximum amount of time to be spent in meetings. In one non-limiting embodiment, the predetermined threshold comprises a maximum amount of meeting time within a selected time period. In other embodiments, the predetermined threshold comprises a maximum amount of meeting time during a predetermined portion of a selected time period. In further embodiments, the predetermined threshold comprises a maximum amount of meeting time outside a selected time period. Further details of these embodiments will be discussed below.

Further, attribute data associated with an attribute of the user 105 may be stored in the calendar database 180 in the Table T3, the Table T2 or another suitable Table.

In some of these embodiments, the preference to limit time in the schedule spent in meetings comprises a preference that at least a portion of a given time period in the schedule remain free of meetings. In these embodiments, the predetermined threshold for meetings within the given time period is "0". For example, in some embodiments, the user 105 may prefer that meetings be scheduled only during core business hours of the user 105, or during core business hours of a business associated with the user 105. In these embodiments, the user 105 may hence prefer that those hours outside of core business hours remain free of meetings. The user 105 may then further prefer to be informed of his/her prospective availability with respect to a request for a meeting. For example, the user 105 may prefer to be informed of requests for meetings that occur outside of core business hours in the form of an extended notification 135 (e.g. a schedule notification) to be displayed on the output device 120, otherwise known as an extended notification feature. Hence, in these embodiments, the attribute data comprises a start time and an end time of the core business hours, and an indication that the user 105 prefers that the hours outside of core business hours remain free of meetings. In some embodiments, the attribute data may further comprise a calendar date on which the user prefers the extended notification feature to be active. In other embodiments, the attribute data may further comprise a frequency that the user prefers that that meetings be scheduled only during core business hours of the user 105, for example every day, every Monday, every second day, every second Thursday and the like. However, embodiments are not limited by the length of the core business hours, the start time of the core business hours, the end time of the core business hours, the date or the frequency. In some embodiments, the attribute data may further comprise a label associated with the preference of the user 105. However, embodiments are further not limited by the label.

In these embodiments, the Table T3 may comprise, in a non-limiting example:

| | |
|---|---|
| Extended notification Feature | On/Off |
| Date/Freq. | May 25, 2007/ Every Day/ Every Business Day/Every Monday |
| Core Business Hours Start Time | 9 am |
| Core Business Hours End Time | 5 pm |
| Label | Busy Outside of Business Hours |
| Restricted Address(es) (Optional) | company.com |

Hence, in the non-limiting example, the Table T3 comprises an indication that the user 105 prefers to be informed of requests for meetings that occur outside of core business hours, in the form of an extended notification feature being turned on or off (described below). The Table T3 further comprises the date or frequency that the extended notification feature should be active, the core business hours start time and end time, and label indicative of the preference of the user 105. The data stored at Table T3 may be provisioned by the user 105 during a provisioning process, or updated by the user 105 at any time, by interacting with the calendar application 170 via the input device 125 and the output device 120.

In some embodiments, the Table T3 further comprises a list of at least one network address, "Restricted address(es)". In these embodiments, the preference to limit time in the schedule spent in meetings comprises a preference that at least a portion of a given time period in the schedule remain free of meetings with certain individuals associated with the at least one network address. The network address may comprise an e-mail address, or a domain name. In embodiments, where the network address comprises an e-mail address, the user 105 may prefer that meetings with the individual associated with the e-mail address be scheduled only during core business hours of the user 105, or during core business hours of a business associated with the user 105. In embodiments, where the network address comprises a domain name, the user 105 may prefer that meetings with individual associated with the domain name be scheduled only during core business hours of the user 105, or during core business hours of a business associated with the user 105.

Hence, if the request for the meeting originates from within a corporate domain of the user 105 (e.g. "company.com"), then the user 105 could be informed that a business colleague is attempting to schedule a meeting outside core business hours. Alternatively, if the request for the meeting originates from outside a corporate domain of the user 105, then the user 105 could be informed that someone who is potentially non-business related is attempting to schedule a meeting outside inside business hours. In the latter embodiment, the table T3 above would store the network addresses of individuals from which the user 105 prefers to accept meeting requests.

In some embodiments where the attribute data comprises a preference a preference that at least a portion of a given time period in the schedule remain free of meetings, the given time period may comprise a period of time where the user 105 is at least partially free, but wishes to be informed of requests for meetings which occur in the period of time. For example, the user 105 may prefer to be informed of requests for meetings that occur within the next N minutes and/or hours and/or days. In these embodiments, the Table T3 may comprise, in a non-limiting example:

| | |
|---|---|
| Extended notification Feature | On/Off |
| Starting Time | 2:30 pm (May 25, 2007) |
| Time Period | Next 3 Hours (or Next 3 Days or Next 30 Minutes) |
| Label | Busy Outside for the next 3 Hours |

Hence, in the non-limiting example, the Table T3 comprises an indication that the user 105 prefers to be informed of requests for meetings that occur in the next 3 hours, starting from a Starting Time, in the form of an extended notification feature being turned on or off (described below). The Table T3 further comprises the Time Period that the extended notification feature should be active, and a label indicative of the preference of the user 105. The data stored at Table T3 may be provisioned by the user 105 during a provisioning process, or updated by the user 105 at any time, by interacting with the calendar application 170 via the input device 125 and the output device 120.

In yet further embodiments, the user 105 may prefer that a defined period of the schedule, for example a defined period of the core business hours, remain free of meetings. The user 105 may then further prefer to be informed of his/her prospective availability with respect to a request for a meeting. For example, the user 105 may prefer to be informed of requests for meetings that fall within the defined period, in the form of the extended notification 135 to be displayed on the output device 120. In these embodiments, the attribute data comprises a start time and an end time of the defined period, and an indication of the user's preference that the defined period remains free of meetings. In some embodiments, the attribute data may further comprise a calendar date that the extended notification feature is to be active. In other embodiments, the attribute data may further comprise a frequency that the extended notification feature is to be active, for example every day, every Monday, every second day, every second Thursday and the like. However, embodiments are not limited by the length of the defined period, the start time of the defined period, the end time of the defined period, the position of the defined period within the schedule, the date of the defined period or the frequency of the defined period. In some embodiments, the attribute data may further comprise a label associated with the preference of the user 105. However, embodiments are further not limited by the label.

In a non-limiting embodiment, the user 105 may prefer that a lunch hour of the user 105 remain free of meetings. The user 105 may then further prefer to be informed of his/her prospective availability with respect to a request for a meeting. For example, the user 105 may prefer to be informed of requests for meetings that fall within a lunch hour, in the form of the extended notification 135 to be displayed on the output device 120. In these embodiments, the user 105 may prefer that all lunch hours remain free of meetings. In other embodiments the user 105 may prefer that certain lunch hours remain free of meetings, for example, lunch hours on particular days of the week, each week, or on particular dates. In another non-limiting example, the user 105 may prefer that a morning remains free of meetings. The user 105 may then further prefer to be informed of his/her prospective availability with respect to a request for a meeting. For example, the user 105 may prefer to be informed of requests for meetings that fall within a morning, in the form of an extended notification 135 to be displayed on the output device 120.In these embodiments, the user 105 may prefer that all mornings remain free of meetings. In other embodiments the user 105 may prefer that certain mornings remain free of meetings, for example, mornings on particular days of the week, each week, or on particular dates.

In these embodiments, the Table T3 may comprise, in a non-limiting example:

| | |
|---|---|
| Extended notification Feature | On/Off |
| Date/Freq. | May 25, 2007/ Every Day/ Every Business Day/Every Monday |
| Defined Period Start Time | 12 pm |
| Defined Period End Time | 3 pm |
| Core Business Hours Start Time | 9 am |
| Core Business Hours End Time | 5 pm |
| Label | Lunch/Work Time/Desk Time |

Hence, in the non-limiting example, the Table T3 comprises an indication that the user 105 prefers to be informed of requests for meetings fall within the defined time period, in the form of an extended notification feature being turned on or off (described below). The Table T3 further comprises the date or frequency that the extended notification feature should be active, the defined period start time and end time, the core business hours start time and end time, and label associated with the preference of the user 105.

In yet further embodiments, the user 105 may prefer that at least a given amount of time during the given time period remain free of meetings. In these embodiments, the predetermined threshold for meetings within the given time period is a given number of hours, and/or a given percentage of the given time period. For example, the user 105 may have a preference that at least a given number of hours during core business hours remain free of meetings. The user 105 may then further prefer to be informed of his/her prospective availability with respect to a request for a meeting. For example, the user 105 may prefer to be informed of requests for meetings that cause the amount of time free within the given time period to fall below the given amount of time, in the form of the extended notification 135 to be displayed on the output device 120. In some these embodiments, the attribute data comprises the number of hours that are to remain free of meetings during the given time period. In other of these embodiments, the user's preference of the number of hours that are to remain free of meetings during the given time period may be expressed in terms of the number of hours that the user is willing to spend in meetings during the given time period. In any event, in these embodiments, the attribute data further comprises a record of the given time period and an indication of the user's preference that at least a given number of hours during the given time period remain free of meetings. The record of the given time period may comprise a start time and an end time of the given time period. In some of these embodiments, the record of the given time may further comprise a calendar date that the extended notification feature is to be active. In other of these embodiments, the record of the given time period may further comprise a frequency that the extended notification feature is to be active, for example every day, every Monday, every second day, every second Thursday and the like. However, embodiments are not limited by the given number of hours, the length of the given time period, the start time of the given time period, the end time of the given period, the position of the given time period within the schedule, the date of the given time period or the frequency of the given time period. In some embodiments, the attribute data may further comprise a label associated with the preference of the user 105. However, embodiments are further not limited by the label.

In these embodiments, the Table T3 may comprise, in a non-limiting example:

| | |
|---|---|
| Extended notification Feature | On/Off |
| Date/Freq. | May 25, 2007/ Every Day/ Every Business Day/Every Monday |
| Amount of Time to Remain Free | 2.5 Hours |
| Core Business Hours Start Time | 9 am |
| Core Business Hours End Time | 5 pm |
| Label | Work Time/Desk Time |

Hence, in the non-limiting example, the Table T3 comprises an indication that the user 105 prefers to be informed of requests for meetings that will cause the at least a given amount of time during the given time period that is to remain free of meetings, to include meetings, in the form of an extended notification feature being turned on or off (described below). The Table T3 further comprises the date or frequency that the extended notification feature should be active, amount of time the user 105 prefers should remain free during core business hours, the core business hours start time and end time, and a label associated with the preference of the user 105.

In yet further embodiments, the user 105 may prefer that at least a percentage of the given time period remain free of meetings. For example, the user 105 may have a preference that at least a percentage of the core business hours remain free of meetings. The user 105 may then further prefer to be informed of his/her prospective availability with respect to a request for a meeting. For example, the user 105 may prefer to be informed of requests for meetings that cause percentage of time free within the given time period to fall below a percentage of the given time period remain free of meetings, in the form of the extended notification 135 to be displayed on the output device 120. In some these embodiments, the attribute data comprises the at least a percentage of the given time period that is to remain free of meetings. In other of these embodiments, the user's preference of the at least a percentage of the given time period that is to remain free of meetings may be expressed in terms of the maximum percentage of the given time period that the user is willing to spend in meetings. In any event, in these embodiments, the attribute data further comprises a record of the given time period and an indication of the user's preference that the at least a percentage of the given time period that is to remain free of meetings. The record of the given time period is similar to the record of the given time period described above. Embodiments are not limited by the at least a percentage of the given time period that is to remain free of meetings, the start time of the given time period, the end time of the given period, the position of the given time period within the schedule, the date of the given time period or the frequency of the given time period. In some embodiments, the attribute data may further comprise a label associated with the preference of the user 105. However, embodiments are further not limited by the label.

In these embodiments, the Table T3 may comprise, in a non-limiting example:

| | |
|---|---|
| Extended notification Feature | On/Off |
| Date/Freq. | May 25, 2007/ Every Day/ Every Business Day/Every Monday |
| Percentage of Time to Remain Free | 40% |
| Core Business Hours Start Time | 9 am |
| Core Business Hours End Time | 5 pm |
| Label | Work Time/Desk Time |

Hence, in the non-limiting example, the Table T3 comprises an indication that the user 105 prefers to be informed of requests for meetings that will cause the at least a percentage of the given time period that is to remain free of meetings, to include meetings, in the form of an extended notification feature being turned on or off (described below). The Table T3 further comprises the date or frequency that the extended notification feature should be active, the percentage of time the user 105 prefers should remain free during core business hours, the core business hours start time and end time, and a label associated with the preference of the user 105.

In some embodiments where the attribute data comprises a preference to limit time in the schedule spent in meetings, the preference to limit time spent in the schedule in meetings may comprise a preference to attend a maximum given number of meeting during a given time period. In these embodiments, the predetermined threshold for meetings within the given time period is the maximum number of meetings during the given time period that is preferred. For example, the user 105 may have a preference to limit the number of meetings to a maximum given number during core business hours. The user 105 may then further prefer to be informed of his/her prospective availability with respect to a request for a meeting. For example, the user 105 may prefer to be informed of requests for meetings that cause the number of meetings scheduled during the core business hours to exceed the maximum given number, in the form of the extended notification 135 to be displayed on the output device 120. In some these embodiments, the attribute data comprises the maximum given number of meetings. In these embodiments, the attribute data further comprises a record of the given time period and an indication of the user's preference to attend a maximum given number of meeting during a given time period. The record of the given time period is similar to the record of the given time period described above. Embodiments are not limited by the at least a percentage of the given time period that is to remain free of meetings, the start time of the given time period, the end time of the given period, the position of the given time period within the schedule, the date of the given time period, the frequency of the given time period or the maximum given number of meetings. In some embodiments, the attribute data may further comprise a label associated with the preference of the user 105. However, embodiments are further not limited by the label.

In these embodiments, the Table T3 may comprise, in a non-limiting example:

| | |
|---|---|
| Extended notification Feature | On/Off |
| Date/Freq. | May 25, 2007/ Every Day/ Every Business Day/Every Monday |
| Maximum Given Number of Meetings | 5 |
| Core Business Hours Start Time | 9 am |
| Core Business Hours End Time | 5 pm |
| Label | Work Time/Desk Time |

Hence, in the non-limiting example, the Table T3 comprises an indication that the user 105 prefers to be informed of requests for meetings that will cause the maximum given number of meeting during a given time period to be exceeded, in the form of an extended notification feature being turned on or off (described below). The Table T3 further comprises the date or frequency that the extended notification feature should be active, the maximum given number of meetings that user 105 prefers to attend within the core business hours, the core business hours start time and end time, and a label associated with the preference of the user 105.

In some embodiments, the attribute data comprises a location of the user 105. In these embodiments, the user 105 may prefer to be warned about meetings that may require excess travel time to attend, as described below. In some of these embodiments, the location of the user 105 comprises a current location of the user 105. In other embodiments, the location of the user 105 comprises a planned location of the user 105. In these embodiments, the location of the user 105 may be stored at the calendar database 180, for example within Table T3. In embodiments where the location of the user 105 comprises a planned location of the user 105, the planned location of the user 105 may be stored at the calendar database 180 in association with the time of day and the date that the user 105 is planning to be at the planned location 105. In these embodiments, the planned location and the associated time and date may be determined by processing a record of data associated with a meeting, for example Table T1, described above. In other embodiments, the user 105 may manually input the location of the user 105 in the calendar database 180 by interacting with the calendar application 170 as described above, as well as an associated date and time. In some embodiments where the location of the user 105 comprises a current location of the user 105, only the location of the user 105 may be stored at the calendar database 180, and it is understood that the stored location comprises the current location of the user 105.

In these embodiments, the attribute data comprises a record of the current location of the user 105 and/or planned locations of the user 105. The location of the user 105 may be stored as a street address and/or a longitude and a latitude, and/or a proxy associated with a street address and/or a longitude and a latitude. In some of these embodiments, the record of the current location of the user 105 and/or planned locations of the user 105 may be stored within the Table T3. In these embodiments, the Table T3 may comprise, in a non-limiting example:

| | | |
|---|---|---|
| Extended notification Feature | | On/Off |
| Current Location | | Holiday Inn, Winnipeg, Manitoba |
| Date: May 25, 2007 | | |
| Time | Planned Location | |
| 6am | Home | |
| 7am | Diner at Yonge and Woodlawn St., Toronto | |
| 8am | Office | |
| 9am | Bob's Office | |
| 10am | | |
| 11am | | |
| 12am | Restaurant at Yonge and Summerhill | |
| 1pm | Office | |
| 2pm | Office | |
| 3pm | Office | |
| 4pm | Office | |
| 5pm | Office | |
| 6pm | Driving Home | |
| 7pm | Home | |

Hence, in the non-limiting example, the Table T3 comprises an indication that the user 105 prefers to be informed of meetings that may require excess travel time to attend, in the form of an extended notification feature being turned on or off, the current location of the user 105, a calendar date, a column indicating the time of day for the calendar date, and a column for indicating the planned location of the user 105 at a particular time of day on the calendar date. A record may be maintained for each calendar date in the schedule and may be populated, at least in part, by interfacing with the calendar database 180 which stores the schedule of the user 105 (e.g. from planned locations present in the calendar database 180). In other embodiments, the data may be organized in a different manner as long as the planned locations are associated with the time of day, and the date, on which they are scheduled. In this example, each location has been stored as a proxy associated with a street address and/or a longitude and latitude, for example "Home" and "Office". A street address and/or longitude and latitude associated with the proxy may be stored in a record (not depicted) in the calendar database 180, and populated via a provisioning process similar to that described above. In embodiments which comprise the GPS unit 145, the record storing the street address etc., may be provisioned by interacting with the GPS unit 145 associated with the user 105.

In embodiments that comprise the GPS unit 145, the computing device 110 is coupled to the GPS unit 145, for example via the interface 150, either wirelessly or wired. For example, the GPS unit 145 may be a standalone GPS unit carried by the user 105. In other embodiments, the computing device 110 may comprise the GPS unit 145. In some of these embodiments, the computing device 110 may be further enabled to detect the proximity of the user 105 to the computing device 110 such that, when the user 105 is detected proximal to the computing device 110, the calendar application 170 is notified of the current location of the user 105. In embodiments that comprise the apparatus 199, the apparatus may include the GPS unit 145.

In these embodiments, the user 105 may also use the GPS unit 145 to provision a record of a street address and/or longitude and latitude associated with a proxy in the calendar database 180. For example, then the user 105 is at a location the user 105 wishes to call "Home", the user may interact with the calendar application 170 to input the proxy "Home" and initiate an interaction between the calendar application 170 and the GPS unit 145. In this interaction, the calendar application 170 requests the current location of the user 105 from the GPS unit 145, and the calendar application 170 then causes the current location and the proxy "Home" to be stored in the calendar database 180 in association with each other. Alternatively, the proxy may be input to the GPS unit 145, and the proxy and the current location may be transmitted to the calendar application 170 for storage at the calendar database 180.

In another embodiment, the user 105 may provision the Table T3 with a typical schedule during which the user 105 is typically at planned locations (e.g. home in the morning and evening, and at work during core business hours).

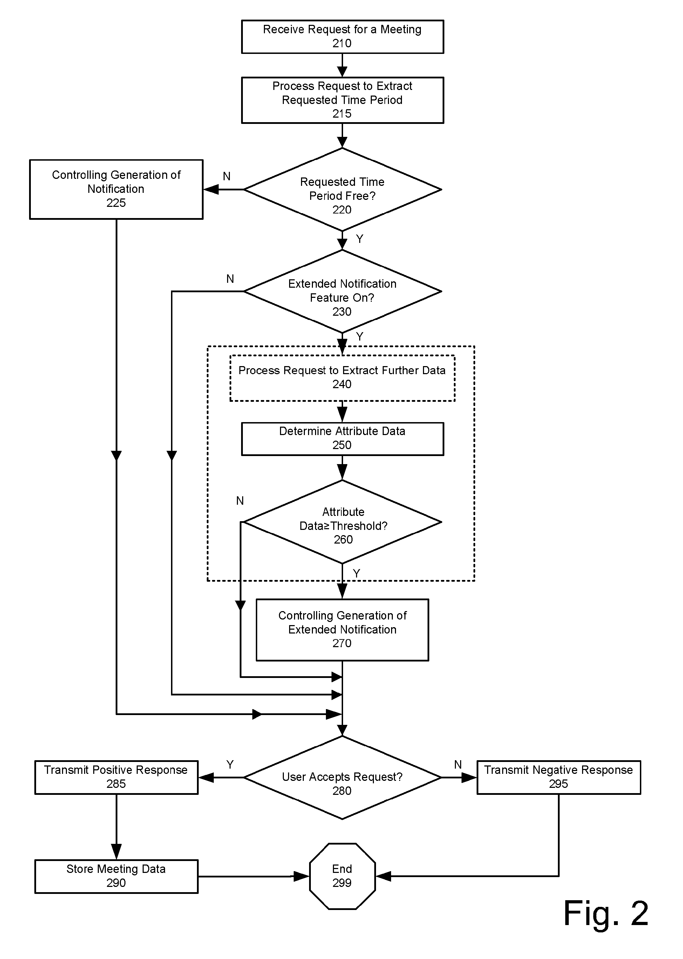

Turning now to Figure 2, which depicts a method of determining a schedule of the user 105. The method of Figure 2 may be performed by the calendar application 170, or another appropriate software application processable by the processing unit 130. At step 210, the request 190 for a meeting is received. At step 215 the request 190 is processed to extract a requested time period associated with the request 190, for example a calendar date, start time and end time of the meeting associated with the request 190. In some embodiments further data is extracted from the request 190 at step 215, for example the location of the meeting associated with the request 190, a label associated with the request 190, and any other data which the request 190 comprises.

At step 220, it is determined if the requested time period is free, for example by processing data associated with each meeting in the schedule of the user 105 and comparing the data associated with each meeting in the schedule of the user 105 with the requested time period. In some embodiments, records of data associated with each meeting stored at the calendar database 180, such as Table T1, are processed to determine if the requested time period is free. In other embodiments, the Table T2 is processed to determine if the requested time period is free.

If the requested time period is not free, the calendar application 170 controls the output device 120 to generate a notification at the output device 120 at step 225. The notification is indicative that the requested time period is not free The notification may further comprise an interactive portion which allows the user 105 to accept or decline the request 190, for example an interactive "accept" button and an interactive "decline" button. The user 105 may interact with the interactive portion via the input device 125 to indicate to the calendar application 180 the preference of the user 105 to accept or decline the request 190, at step 280.

If the request 190 is accepted, the response 195 is transmitted to the computing device on the communication network 160 that originated the request 190, at step 285, the response 195 indicative that the user 105 has accepted the request 190. Hence, at step 290, data associated with the request 190 is stored in the calendar database 180, for example by generating a record similar to Table T1. In embodiments which include the Table T2, the Table T2 is updated to reflect the presence of the requested meeting in the schedule of the user 105. Hence, when the user 105 causes the schedule to be displayed at the output device 120, the requested meeting will be displayed as a meeting in the schedule. If, however the user 105 declines the meeting, at step 280 the response 195 is transmitted to the computing device on the communication network 160 that originated the request 190, the response 195 indicative that the user 105 has declined the request 190. At step 299 the method of Figure 2 is complete.

Returning to step 220, if the requested time period is free, the calendar application 170 then determines if an extended notification feature is on at step 230. In some embodiments, it may be determined if the extended notification feature is on by processing the Table T3. Alternatively, a record of the extended notification feature being on or off may be stored within another file associated with the calendar application 170. If the extended notification feature is off, then the user 105 may enter their intention to accept or decline the request 190 at step 280, as described above.

If, however, the extended notification feature is on, in some embodiments, at step 240, the request 190 is further processed to extract further data. In some of these embodiments, the request 190 is processed at step 240 to extract the location of the meeting associated with the request 190, as described below. However in other embodiments, the further data may be extracted from the request 190 at step 215, as described above.

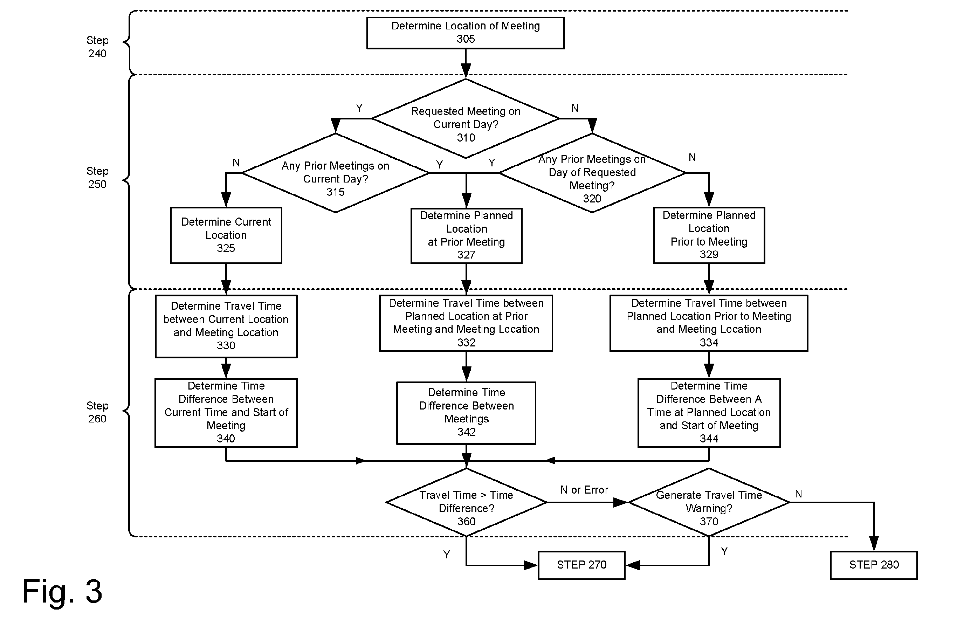

At step 250, the attribute data is determined. Embodiments where the attribute data comprises a preference to limit the time in the schedule spent in meetings, and embodiments where the attribute data comprises a location of the user 105 are discussed in greater detail below, in connection with Figure 3 and with reference to steps 250 and 260.

In embodiments where an attribute data comprises a preference to limit the time in the schedule spent in meetings, data associated with the preference are determined at step 250, for example by processing the Table T3 to extract data associated with the attribute data. In embodiments where the user 105 prefers that meetings be scheduled only during core business hours of the user 105, the data associated with the preference may comprise the start time and end time of the core business hours, and the date and/or frequency that the extended notification feature is to be active.

In embodiments where the user 105 prefers that a defined period of the schedule, for example a defined period of the core business hours, remain free of meetings, the data associated with the preference may comprise the start time and end time of the core business hours, and the start time and end time of the defined period, and the date and/or frequency that the extended notification feature is to be active. In some embodiments, the data associated with the preference may further comprise a label associated with the preference, as described above.

In embodiments where the user 105 prefers that at least a given amount of time during a given time period remain free of meetings, for example at least a given amount of time remain free of meetings during core business hours, the data associated with the preference may comprise the start time and end time of the core business hours, the length of the given amount of time, and the date and/or frequency that the extended notification feature is to be active. For example, the user 105 may prefer that the user 105 has at least 2.5 hours free on a given day, or at a given frequency. In some embodiments, the data associated with the preference may further comprise a label associated with the preference, as described above.

In embodiments where the user 105 prefers that at least a percentage of a given time period is to remain free of meetings, for example at least percentage of core business hours is to remain free of meetings, the data associated with the preference may comprise the start time and end time of the core business hours, the percentage of the core business hours that is to remain free, and the date and/or frequency that the extended notification feature is to be active. For example, the user 105 may prefer that the user 105 has at least 40% of their time free on a given day, or at a given frequency. In some embodiments, the data associated with the preference may further comprise a label associated with the preference, as described above.

In embodiments where the user 105 prefers that at least a percentage of a given time period is to remain free of meetings, for example at least a percentage of core business hours is to remain free of meetings, the data associated with the preference may comprise the start time and end time of the core business hours, the percentage of the core business hours that is to remain free, and the date and/or frequency that the extended notification feature is to be active. For example, the user 105 may prefer that the user 105 has at least 40% of their free on a given day, or at a given frequency. In some embodiments, the data associated with the preference may further comprise a label associated with the preference, as described above.

In embodiments where the user 105 prefers to attend a maximum given number of meetings during a given time period, for example a maximum number of meetings during core business hours, the data associated with the preference may comprise the start time and end time of the core business hours, maximum number of meetings the user 105 is willing to attend, and the date and/or frequency that the extended notification feature is to be active. For example, the user 105 may prefer to limit the number of meetings during core business hours to five on a given day, or at a given frequency. In some embodiments, the data associated with the preference may further comprise a label associated with the preference, as described above.

At step 260, it is determined if the attribute data is indicative that the user 105 may prefer to decline the request 190 by comparing the attribute data to the predetermined threshold. In embodiments where the attribute data comprises a preference that at least a portion of a given time period in the schedule remain free of meetings, at step 260 it is determined if attribute data meets or exceeds the predetermined threshold.

For example, in embodiments where the user prefers that meetings be scheduled only during core business hours of the user 105, it is determined at step 260 if the meeting associated with the request 190 falls outside of core business hours by comparing the requested meeting time with the start time and end time of the core business hours. In embodiments where the user 105 prefers that a defined period of the schedule remain free of meetings, for example a defined period of the core business hours, it is determined at step 260 if the meeting associated with the request 190 falls within the defined period by comparing the requested meeting time with the start time and end time of the defined period. In some of these embodiments it is determined if a portion of the meeting associated with the request 190 falls within the defined period.

In embodiments where the user 105 prefers that at least a given amount of time during a given time period remain free of meetings, for example at least a given amount of time remain free of meetings during core business hours, it is determined at step 260 if the amount of time free during the core business hours will fall below the given amount of time, if the meeting is accepted. In embodiments where the user 105 prefers that at least a percentage of a given time period remain free of meetings, for example at least a percentage of core business hours remain free of meetings, it is determined at step 260 if the percentage of time free during the core business hours will fall below the percentage of the core business hours that is to remain free of meetings, if the meeting is accepted. In embodiments where the user 105 prefers to attend a maximum given number of meetings during a given time period, for example five meetings in a business day, it is determined at step 260 whether the maximum given number of meetings will be exceeded if the meeting is accepted.

If it is determined at step 260 that the attribute data is meets or exceeds the predetermined threshold, the output device 120 is controlled at step 270 to generate an extended notification 135, for example by transmitting a signal to the output device 120 via the interface 150 or another suitable interface.

The extended notification 135 may comprise a notification that a meeting is being requested that the user 105 may prefer to decline. The extended notification 135 may further comprise a label associated with the preference of the user 105, for example a label from one of the embodiments of the Table T3, as described above. In a particular non-limiting example the extended notification may comprise the text "Notification: You already have 5 hours of meetings on May 25, 2007". In another particular non-limiting example the extended notification may comprise the text "Notification: You already have 3 hours of meetings during core business hours on May 25, 2007". In another particular non-limiting example the extended notification may comprise the text "Notification: You already have 40% of your time devoted to meetings during core business hours only on May 25, 2007". In another particular non-limiting example the extended notification may comprise the text "Notification: You already have 5 meetings scheduled on May 25, 2007". In another particular non-limiting example the extended notification may comprise the text "Notification: This meeting is scheduled outside of core business hours on May 25, 2007". In another particular non-limiting example the extended notification may comprise the text "Notification: A portion of this meeting is scheduled outside of core business hours on May 25, 2007". In another particular non-limiting example the extended notification may comprise the text "Notification: This meeting is scheduled during lunch hours on May 25, 2007". In another particular non-limiting example the extended notification may comprise the text "Notification: This meeting is scheduled during a morning you prefer to remain free on May 25, 2007". In another particular non-limiting example the extended notification may comprise the text "Notification: This meeting on May 25, 2007, which is already a busy day". In another particular non-limiting example the extended notification may comprise the text "Notification: A person outside your corporation has requested a meeting during core business hours". In another particular non-limiting example the extended notification may comprise the text "Notification: A person inside your corporation has requested a meeting outside core business hours".

The extended notification 135 may further comprise an interactive portion which allows the user 105 to accept or decline the request 190, for example an interactive "accept" button and an interactive "decline" button, similar to that described above with reference to the step 280. However, in these embodiments, step 280 is performed via an interaction of the user 105 with the interactive portion of the extended notification 135. Once the user 105 indicates their preference at step 280, the method of Figure 2 proceeds to either step 285 or step 295 as described above.

Hence by, controlling the output device 120 to generate the extended notification 135 (i.e. a schedule notification), if the requested time period is free of other meetings, and the attribute data is indicative that the request be preferably declined, interaction with the computing device 110 is minimized saving resources such as additional processing time that use computing device 110 would normally expend while the user 105 searched through their schedule to determine if he/she is able to accept and/or attend the meeting. For example, time for processing inputs from the input device 125 is reduced, as well as time spent processing user's request for information regarding his/her schedule as he/she repeatedly accesses the database 180 to retrieve scheduling/meeting data.

Attention is now directed to embodiments where the attribute data comprises a location of the user 105. Reference is made to Figure 3, which depicts details of steps 240, 250 and 260 within these embodiments. At step 305, which corresponds to step 240 of Figure 2, the location of the meeting associated with the request 290 is determined, as described above. In an alternative embodiment, the location of the meeting associated with the request 190 may have been determined at step 215, as described above.

In Figure 3, steps 310 through 329 correspond to step 250 of Figure 2, wherein the attribute data is determined. In this embodiment, the attribute data comprises a location of the user 105; however the location of the user 105 that is determined will depend on conditions that will be described with reference to steps 310 through 329. Also in Figure 3, steps 330 through 370 correspond to step 260 of Figure 2, wherein it is determined if the attribute data is indicative that the user 105 may prefer to decline the request 190. How this determination is performed in this embodiment will be described below with reference to steps 330 through 370.

At step 310, it is determined if the meeting associated with the request 190 occurs on the current calendar day that the request 190 is received. This step may be effected by comparing the calendar date of the meeting associated with the request 190, which was determined at step 215, with the current calendar date. In some embodiments, the current calendar date may be stored in the calendar database 180 in association with the calendar application 170, and hence the current calendar date may determined by retrieving he current calendar date from the calendar database 180. In other embodiments, the computing device 110 may further comprise a date/time application (not depicted) and/or an internal clock (not depicted), which tracks the current calendar date and time for the computing device 110. In these embodiments, the current calendar date may be determined by querying the date/time application and/or the internal clock.

If the meeting associated with the request 190 occurs on the current calendar day that the request 190 is received, at step 315 it is determined if there are meetings scheduled prior to the meeting associated with the request 190, on the current calendar day. This determination may be made by processing either each record of data associated with meetings in the schedule, for example the Table T1, or by processing the schedule of the user 105, for example the Table T2.

If there are no meetings prior to the meeting associated with the request 190, on the current calendar day, the current location of the user 105 is determined at step 325. In some embodiments, the current location of the user 105 may be determined by querying the GPS Unit 145. In other embodiments, the current location of the user 105 may be determined by querying the user 105, for example by causing a dialog box (not depicted) to be displayed at the output device 120, requesting that the user 105 enter their current location via the input device 125. In embodiments wherein the Table T3 comprises planned locations in association with the time of day, and the date, on which they are scheduled, the current location may be determined by processing the Table T3 to extract the location that the user 105 had planned to be at, at the current time. In some of these embodiments, the user 105 may be requested to confirm the current location via a dialog box displayed at the output device 120, and the input device 125.

If however, at step 315, it is determined that there are meetings scheduled prior to the meeting associated with the request 190, on the current calendar day, the planned location of the user 105 at the prior meeting is determined at step 325. Note that if the prior meeting occurs in the past, this step is ignored, and the current location of the user 105 is determined at step 325. Furthermore, if there is more than one prior meeting, then only the prior meeting that is closest in time to the meeting associated with the request 190 need be considered. In any event, in some embodiments, to determine the planned location of the user 105 at the prior meeting, the record of the prior meeting, similar to Table T1, may be processed. In other embodiments, to determine the planned location of the user 105 at the prior meeting, the schedule of the user 105 may be processed, for example Table T2. In embodiments, wherein the Table T3 comprises planned locations in association with the time of day, and the date, on which they are scheduled, the planned location of the user 105 at the prior meeting may be determined by processing the Table T3. In some of these embodiments, the user 105 may be requested to confirm the current location via a dialog box displayed at the output device 120, and the input device 125.

Alternatively, the step of processing the table T1, the Table T2 and/or the Table T3 to determine the planned location of the user 105 at the prior meeting, or the current location of the user 105, may be performed in conjunction with step 315.

Returning now to step 310, if it is determined that the meeting associated with the request 190 does not occur on the current calendar day that the request 190 is received, at step 320 it is determined if there are meetings scheduled prior to the meeting associated with the request 190, on the calendar date of the meeting associated with the request 190. This step is similar to the step 315, described above.

If there are meetings prior to the meeting associated with the request 190, on the calendar day of the requested meeting, the planned location of the user 105 at the prior meeting is determined at step 327, as described above.

If the location of the user 105 that is determined comprises the current location of the user 105, determined at step 235, or a planned location of the user 105 at the prior meeting, the calendar application 170 proceeds to step 330, described below.

Returning to step 320, if there are no meetings prior to the meeting associated with the request 190, on the calendar day of the requested meeting, a planned location of the user 105 prior to the meeting associated with the request 190, is determined at step 329. In some embodiments, the planned location of the user 105 prior to the meeting associated with the request 190 may be determined by querying the user 105 via a dialog box displayed at the output device 120, and the input device 125. In embodiments, wherein the Table T3 comprises planned locations in association with the time of day, and the date, on which they are scheduled, the planned location of the user 105 prior to the meeting associated with the request 190 may be determined by processing the Table T3. In the event that there is more than one planned location of the user 105 prior to the meeting associated with the request 190, the planned location that is closest in time to the meeting associated with the request 190, is determined.

Attention is now directed to steps 330, 332 and 334 where the estimated travel time between the location of the user 105 and the location of the meeting associated with the request 190 is determined. If the current location of the user 105 was determined at step 325, the estimated travel time between the current location of the user 105 and the location of the meeting associated with the request 190 is determined at step 330. If the planned location of the user 105 at the prior meeting was determined at step 327, the estimated travel time between the planned location of the user 105 at the prior meeting and the location of the meeting associated with the request 190 is determined, at step 332. If the planned location of the user 105 at the prior meeting was determined at step 329, the estimated travel time between the planned location of the user 105 prior to the meeting associated with the request 190 and the location of the meeting associated with the request 190 is determined, at step 334.

In some embodiments, the estimated travel time is determined by consulting a database comprising a record of estimated travel times between locations. In some embodiments, the database comprising a record of estimated travel times between locations may be local to the computing device 110, while in other embodiments, the database comprising the record of estimated travel times between locations may be remote from the computing device 110. In some of these embodiments, the database comprises the calendar database 180. If the database comprising a record of estimated travel times between locations is remote to the computing device 110, the computing device 110 may be in communication with the database via the communication network 160.

In some embodiments, the estimated travel time is dependent on the preferred mode of travel, for example walking, driving, public transportation, including buses, subway, streetcar, trains, airplane, boat etc. Hence, in some embodiments, the user 105 may be further queried as to the preferred mode of travel.

In a non-limiting example, the record of estimated travel times between locations may be maintained by the user 105, for example if the user 105 has a defined list of locations that the user 105 visits for meetings, or is generally located. The user 105 may provision the record in a provisioning process via at least one dialog box displayed at the output device 120 and at least one interaction with the input device 125. In these embodiments, the user may provision the record with experiential knowledge of the travel time between locations, or by using mapping applications which calculate estimated travel times between locations, as described below.

In another non-limiting example, a company that has multiple locations may maintain the record of estimated travel times between the locations. Within this example, if a company has a campus environment, with various buildings within the campus, the company may maintain a record of various walking times and/or driving times. Within embodiments where the record comprises estimated travel times between locations using different modes of transportation, the user 105 may be further queried as to the preferred mode of travel.

In other embodiments, the estimated travel time is determined by submitting the location of the user 105 and location of the meeting associated with the request 105 to a mapping application, along with a query for the estimated travel time between the locations. In some of these embodiments, the mapping application may be local to the computing device 110, for example Garmin MapSource™ from Garmin International Inc. 1200 E. 151st Street, Olathe, KS 66062-3426. In other embodiments, the mapping application may be remote from the computing device 110, for example Google Maps (maps.google.com) from Google, 1600 Amphitheatre Parkway, Mountain View, CA 94043.

In some embodiments, the locations may be processed into a format that is processable by the mapping application. In a non-limiting example, if one or more of the locations comprise a proxy associated with a street address and/or longitude and latitude, the record of the street address and/or longitude and latitude associated with the proxy stored in the calendar database 180 may be consulted to determine the street address and/or longitude and latitude of the location, prior to submitting the locations to the mapping application. In another non-limiting example, the user 105 may be prompted to enter the locations in a format that is processable by the mapping application, via at least one dialog box displayed at the output device 120, and at least one interaction with the input device 125. The user 105 may also be prompted to point to the locations on a map displayed at the output device 120, via the input device 125. In another non-limiting example, the user 105 may be prompted to enter the locations in a format that is processable by the mapping application, as described, if the mapping application returns an error during an attempt to process the locations.

At step 340, if the current location of the user 105 has been determined at step 325, the time difference between the current time and the start time of the meeting associated with the request 190 is determined. In some embodiments, the current time is maintained by a time function in the calendar application 170. In other embodiments, the current time is maintained by a date/time application (not depicted) and/or an internal clock (not depicted) of the computing device 110, described above. Alternatively, at step 342, if the planned location of the user 105 at the prior meeting has been determined at step 327, the time difference between the end time of the prior meeting and the start time of the meeting associated with the request 190 is determined. In yet another alternative, at step 342, if the planned location of the user 105 prior to the meeting associated with the request 190 has been determined at step 329, the time difference between a latest known time the user 105 is at the planned location and the start time of the meeting associated with the request 190 is determined, at step 344. For example, In this embodiment, if the attribute data comprises a record of the planned locations of the user 105, as described above, the latest known time the user 105 is at the planned location may be determined by processing the data associated with user 105, for example the embodiment of Table T3, described above, that comprises a record of planned locations of the user 105. In the event that there is more than one planned location, the planned location that the user 105 plans to be at, that is closest in time to the meeting associated with the request 190, may be used.

At step 360, the time difference determined at one of steps 340, 342, and 344 is compared to the estimated travel time determined at the steps 330, 332 and 344, respectively. If the estimated travel time between the location of the user 105 and the location of the meeting associated with the request 190 exceeds the time difference determined at steps 340, 342 or 344, the user 105 may require excess travel time to attend the meeting associated with the request 190. Hence the extended notification 135 is generated at step 270 as described above, for display on the display device 135 to warn the user 105 that a meeting is being requested that the user 105 may prefer to decline.

In these embodiments, the extended notification 135 may comprise the location of the user 105 and/or the location of the meeting associated with the request 190 and/or the estimated travel time and/or the time difference. In a particular non-limiting example the extended notification 135 may comprise the text "Notification: The requested meeting is at 1300 Yonge Street, however you will be at 483 Bay Street prior to the meeting. The estimated travel time between the locations is 30 minutes, however your current schedule only allows you 5 minutes to get to 1300 Yonge Street". In another particular non-limiting example, the extended notification 135 may comprise: "Notification. The requested meeting is at 1300 Yonge Street, in 15 minutes. However, you are currently at Home, and the estimated travel time to the meeting is 30 minutes". In another particular non-limiting embodiment, the extended notification 135 may comprise: "Notification. The requested meeting is at 1300 Yonge Street. While you have no meetings prior, you are planning to be at the Office just prior to the requested meeting and the estimated travel time is 30 minutes. Your current schedule only allows you 0 minutes to get to 1300 Yonge Street".

In embodiments of step 360 where the estimated travel time between the location of the user 105 and the location of the meeting associated with the request 190 does not exceed the time difference determined at steps 340, 342 or 344, the user 105 may be asked to accept or decline the request 190, at step 280, described above. However, in some embodiments, the user 105 may prefer to be warned, nonetheless of the estimated travel time determined at step 330, 332 and 334. In these embodiments, it is determined at step 370 if the user 105 desires a travel time notification, in the form of the extended notification 135 described above (step 270). However, in these embodiments, the extended notification 135 may comprise a notice that the request 190 for a meeting has arrived, the location of the user 105, the location of the meeting associated with the request 190, and the estimated travel time between the locations.

In some embodiments, the determination of estimated travel time at steps 330, 332 and 334 may yield an error. For example, if the location of the meeting associated with the request 190 is remote from the location of the user 105, and hence requires multiple modes of travel, and complex scheduling, a mapping application may not be able to calculate the estimated travel time. Consider if a user located in Toronto, Canada, and the meeting that is being requested is Paris, France. In some instances, it may be difficult to determine the estimated travel time between these locations due to the complexity of getting to the airport in Toronto, flying to Paris, and travelling to the meeting in Paris from the airport. In these embodiments, comparing the time difference to the estimated travel time (i.e. an error) at step 360 also yields an error. In some of these embodiments, the user 105 may nonetheless prefer to be warned of requests for meetings where the estimated travel time cannot be determined. In these embodiments, it is determined at step 370 if the user 105 desires a travel time notification, in the form of the extended notification 135 described above (step 270). However, in these embodiments, the extended notification 135 may comprise a notice that the request 190 for a meeting has arrived, the location of the user 105, the location of the meeting associated with the request 190. However, if the user 105 does not desire a time travel notification, the user 105 may be asked to accept or decline the request 190, at step 280, described above.

While in the previously described embodiments a request for a meeting is generally assumed to originate from a computing device associated with another user (e.g. the request 190), in other embodiments, a request for a meeting may originate from the user 105. For example, the user 105 may attempt to schedule a meeting for himself (or herself) within the calendar application 170 for a given time and/or a given location. In these embodiments, the method of Figure 2 as described above may be applied to the request for the meeting originating from the user 105. However, in these embodiments, rather than the user 105 accepting (or not accepting) the request at step 280, the user 105 may rather be queried as to whether the user 105 wishes to proceed with scheduling the meeting. If so, the meeting data is stored at step 290 as describe above, and if not the method ends at step 299. For example, the user 105 may have set up their preferences for extended notifications via the calendar application 170, but has not paid attention to the existing meetings when the user 105 is scheduling another meeting. Embodiments described herein will then query/warn the user 105 having regard to the preferences of the user 105.

In a particular non-limiting application of the previously described embodiments, the calendar application 170 is enabled to allow the user 105 to provide multiple notification features in various combinations. For example, the user 105 may be able to specify the number of hours to remain free, and/or to be warned if a meeting is scheduled during lunch, and/or to be warned if there is not enough travel time to attend a meeting. However, embodiments are not to be particularly limited by the combinations of notification features.

Persons of skill in the art will understand that the user 105 may set multiple preferences for multiple extended notifications. For example, the user 105 may prefer to attend a maximum given number of meetings during a given time period and/or prefer that at least a percentage of the given time period remain free of meetings and/or prefer to be informed of meetings that may require excess travel time to attend. The user 105 may save his/her preferences via an interaction with the calendar application 170, for example by a dialog box displayed at the output device 120, and at least one interaction with the input device 125. Indeed combinations of preferences of the user 105 are within the scope of the present application, and embodiments are not limited to specific combinations of preferences.

Those skilled in the art will appreciate that in some embodiments, the functionality of the calendar application 170 may be implemented using pre-programmed hardware or firmware elements (e.g., application specific integrated circuits (ASICs), electrically erasable programmable read-only memories (EEPROMs), etc.), or other related components. In other embodiments, the functionality of the calendar application 170 may be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium may be either a non-wireless medium (e.g., optical or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of generating a notification (135) at a computing device (110), said computing device (110) having an output module (120), said method comprising:
receiving (210) a meeting request having a requested time period;
determining (250) an attribute based on said requested time period and on a calendar database (180) comprising calendared events; and
causing (270) said output module (120) to generate a notification if said attribute meets or exceeds a predetermined threshold (260).

2. The method of claim 1, wherein said determining an attribute further comprises:
selecting a selected time period containing said requested time period; and
calculating said attribute based on calendared events within said selected time period.

3. The method of claim 2, wherein said selected time period comprises at least one of free time on a given date, business hours on a given date, a weekday, a weekend, a given time period on a given date and a given time period within a given week.

4. The method of claim 2, wherein said determining an attribute further comprises calculating said attribute based on at least one of a given network domain and a given network address.

5. The method of any one of the preceding claims, wherein said predetermined threshold comprises any of: a maximum amount of meeting time within a selected time period, a maximum amount of meeting time during a predetermined portion of a selected time period, or a maximum amount of meeting time outside a selected time period.

6. The method of any one of claims 1 to 4, wherein said predetermined threshold comprises at least one of a maximum amount of time, a given number of meetings, a percentage of a selected time period, and a percentage of a time period outside said selected time period.

7. The method of any one of claims 1 to 3, wherein said meeting request further comprises at least one of a network domain and a network address, said attribute is further based on at least one of a given network domain and a given network address, and said causing said output module to generate a notification is further based on comparing at least one of said given network domain and said given network address with at least one of said network domain and said network address.

8. A computing device (110) for generating a notification (135), comprising:
an interface (150) configured for communication with a communications network (160), said interface (150) for receiving a meeting request via said communications network (160), said meeting request having a requested time period;
a memory (140) for storing a calendar application (170), said calendar application (170) configured for:
determining an attribute (250) based on said requested time period and on a calendar database comprising calendared events; and
causing (270) said output module to generate a notification (135) if said
attribute meets or exceeds a predetermined threshold;
a processing unit (130) for processing said calendar application (170) and transmitting a signal to trigger an output module (120) to generate a notification, if said attribute meets or exceeds said predetermined threshold.

9. The computing device of claim 8, wherein the computing device further comprises a handheld electronic device, an input device and said output module.

10. The computing device of claim 8 or claim 9, said calendar application further configured for
selecting a selected time period containing said requested time period; and
calculating said attribute based on calendared events within said selected time period.

11. The computing device of any one of claims 8 to 10, wherein said selected time period comprises at least one of free time on a given date, business hours on a given date, a weekday, a weekend, a given time period on a given date and a given time period within a given week.

12. The computing device of any one of claims 8 to 11, wherein said calendar application (170) is configured for determining an attribute by calculating said attribute based on at least one of a given network domain and a given network address.

13. The computing device of any one of claims 8 to 11, wherein said calendar application (170) is configured for using a predetermined threshold comprising any of: a maximum amount of meeting time within a selected time period, a maximum amount of meeting time during a predetermined portion of a selected time period, or a maximum amount of meeting time outside a selected time period.

14. The computing device of any one of claims 8 to 11, wherein said calendar application (170) is configured for using a predetermined threshold comprising at least one of a maximum amount of time, a given number of meetings, a percentage of a selected time period, and a percentage of a time period outside said selected time period.

15. The computing device of any one of claims 8 to 11, wherein said meeting request further comprises at least one of a network domain and a network address, said calendar application (170) is configured for basing the attribute on at least one of a given network domain and a given network address, and causing said output module to generate a notification based on comparing at least one of said given network domain and said given network address with at least one of said network domain and said network address.

16. A computer readable medium storing computer readable instructions executable by a processor of a computing device to cause said device to implement the steps of the method of any one of claims 1 to 7.

## Amended claims

### Amended claims in accordance with Rule 137(2) EPC.

**1.** A method of generating a notification (135) at a computing device (110), said computing device (110) having an output module (120), said method comprising:
receiving (210), at the computing device (110), meeting request data (190) having a requested time period;
determining (250), at the computing device (110), attribute data (T3), said attribute data including a given time period;
comparing (260), at the computing device, said requested time period and a calendar database (180) comprising calendared events in said given time period with a predetermined threshold of calendar event data associated with said given time period; and
causing (270) said output module (120) to generate a notification if said attribute data meets or exceeds said predetermined threshold (260).

**2.** The method of claim 1, wherein said determining said attribute data comprises:
selecting a selected time period containing said requested time period; and
calculating said attribute data based on said calendared events within said selected time period.

**3.** The method of claim 2, wherein said selected time period comprises at least one of free time on a given date, business hours on a given date, a weekday, a weekend, a given time period on a given date and a given time period within a given week.

**4.** The method of claim 2, wherein said determining said attribute data further comprises calculating said attribute data based on at least one of a given network domain and a given network address.

**5.** The method of any one of the preceding claims, wherein said predetermined threshold comprises any of: a maximum amount of meeting time within a selected time period, a maximum amount of meeting time during a predetermined portion of a selected time period, or a maximum amount of meeting time outside a selected time period.

**6.** The method of any one of claims 1 to 4, wherein said predetermined threshold comprises at least one of a maximum amount of time, a given number of meetings, a percentage of a selected time period, and a percentage of a time period outside said selected time period.

**7.** The method of any one of claims 1 to 3, wherein said meeting request data further comprises at least one of a network domain and a network address, said attribute data further comprises at least one of a given network domain and a given network address, and said causing said output module to generate a notification is further based on comparing at least one of said given network domain and said given network address with at least one of said network domain and said network address.

**8.** A computing device (110) for generating a notification (135), comprising:
an interface (150) configured for communication with a communications network (160), said interface (150) for receiving meeting request data via said communications network (160), said meeting request data having a requested time period;
a memory (140) for storing a calendar application (170), said calendar application (170) configured for:
determining (250) attribute data, said attribute data including a given time period predetermined threshold of calendar event data associated with said requested time period;
comparing said requested time period and a calendar database comprising calendared events in said given time period with a predetermined threshold of calendar event data associated with said requested time period; and
causing (270) said output module to generate a notification (135) if said attribute meets or exceeds a predetermined threshold;
a processing unit (130) for processing said calendar application (170) and transmitting a signal to trigger an output module (120) to generate a notification, if said attribute meets or exceeds said predetermined threshold.

**9.** The computing device of claim 8, wherein the computing device further comprises a handheld electronic device, an input device and said output module.

**10.** The computing device of claim 8 or claim 9, said calendar application further configured for
selecting a selected time period containing said requested time period; and
calculating said attribute data based on said calendared events within said selected time period.

**11.** The computing device of any one of claims 8 to 10, wherein said selected time period comprises at least one of free time on a given date, business hours on a given date, a weekday, a weekend, a given time period on a given date and a given time period within a given week.

**12.** The computing device of any one of claims 8 to 11, wherein said calendar application (170) is configured for determining said attribute data by calculating said attribute data based on at least one of a given network domain and a given network address.

**13.** The computing device of any one of claims 8 to 11, wherein said calendar application (170) is configured for using a predetermined threshold comprising any of: a maximum amount of meeting time within a selected time period, a maximum amount of meeting time during a predetermined portion of a selected time period, or a maximum amount of meeting time outside a selected time period.

**14.** The computing device of any one of claims 8 to 11, wherein said calendar application (170) is configured for using said predetermined threshold comprising at least one of a maximum amount of time, a given number of meetings, a percentage of a selected time period, and a percentage of a time period outside said selected time period.

**15.** The computing device of any one of claims 8 to 11, wherein said meeting request data further comprises at least one of a network domain and a network address, said calendar application (170) is configured for basing the attribute data on at least one of a given network domain and a given network address, and causing said output module to generate a notification based on comparing at least one of said given network domain and said given network address with at least one of said network domain and said network address.

**16.** A computer readable medium storing computer readable instructions which, when executed by a processor of a computing device, cause said device to implement the steps of the method of any one of claims 1 to 7.
